Europäisches Patentamt

European Patent Office

Office européen des brevets

(19)

(11) Publication number: **0 109 394**
**B1**

# (12) EUROPEAN PATENT SPECIFICATION

(45) Date of publication of patent specification: **14.10.87**

(21) Application number: **82902755.6**

(22) Date of filing: **25.05.82**

(86) International application number:
**PCT/US82/00713**

(87) International publication number:
**WO 83/04305 08.12.83 Gazette 83/28**

(51) Int. Cl.⁴: **G 01 C 19/64,** G 01 B 9/02

(54) **INTERFEROMETER WITH KERR EFFECT COMPENSATION.**

(43) Date of publication of application:
**30.05.84 Bulletin 84/22**

(45) Publication of the grant of the patent:
**14.10.87 Bulletin 87/42**

(84) Designated Contracting States:
**AT BE CH DE FR GB LI LU NL SE**

(56) References cited:
**US-A-4 265 541**

**OPTICS LETTERS, VOLUME 6, NO. 4, ISSUED APRIL 1981 (NEW YORK, NEW YORK), R.A. BERGH ET AL, "ALL SINGLE-MODE FIBER-OPTIC GYROSCOPE", PAGES 198-200**

(73) Proprietor: **THE BOARD OF TRUSTEES OF THE LELAND STANFORD JUNIOR UNIVERSITY**
**Encina 105 Stanford University**
**Stanford, California 94305 (US)**

(72) Inventor: **BERGH, Ralph A.**
**89 Douglass Way**
**Atherton, CA 94025 (US)**

(74) Representative: **Rushton, Ronald et al**
**SOMMERVILLE & RUSHTON 11 Holywell Hill**
**St. Albans Hertfordshire AL1 1EZ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

Background of the invention

The present invention relates to fiber optic interferometers, and particularly, to fiber optic ring interferometers for rotation sensing, such as disclosed in Optics Letters, Vol. 6, No. 4, April 1981, pages 198—200.

Fiber optic ring interferometers typically comprise a loop of fiber optic material to which lightwaves are coupled for propagation around the loop in opposite directions. After traversing the loop, the counter-propagating waves are combined so that they constructively or destructively interfere to form an optical output signal. The intensity of this optical output signal varies as a function of the type and amount of interference, which, in turn, is dependent upon the relative phases of the counter-propagating waves.

Ring interferometers have proven particularly useful for rotation sensing. Rotation of the loop creates a relative phase difference between the counter-propagating waves, in accordance with the well known "Sagnac" effect, with the amount of phase difference corresponding to the velocity of rotation. The optical output signal produced by the interference of the counter-propagating waves, when recombined, varies in intensity as a function of the rotation rate of the loop. Rotation sensing is accomplished by detection of this optical output signal.

While mathematical calculations indicate that ring interferometers should be capable of providing rotation sensing accuracies substantially better than are required for inertial navigation (e.g., 001 degrees per hour or less), the results achieved in practice have generally not conformed to theoretical expectations. Some of the reasons for the disparity between theoretical and actual results have been identified as including spurious waves caused by Rayleigh backscattering, and non-rotationally-induced phase differences caused by residual fiber birefringence.

More recently, it was discovered that the accuracy of rotation sensing is also limited by the A. C. Kerr effect. The A. C. Kerr effect is a well known optical effect, in which the refractive index of a substance changes when the substance is placed in a varying electric field. In optical fibers, the electric fields of lightwaves propagating therethrough can themselves change the refractive index of the fiber, in accordance with the Kerr effect. The amount of change is proportional to the square of the electric field, or the light intensity. Since the propagation constant of the fiber, for each of the waves, is a function of refractive index, the Kerr effect manifests itself as intensity dependent perturbations of the propagation constants. Unless such perturbations happen to be exactly the same for each of the counter-propagating waves, the A.C. or optical Kerr effect will cause the waves to propagate with different velocities, resulting in a non-rotationally induced phase difference between the waves, and thereby creating a spurious signal, which is indistinguishable from a rotationally induced signal. This spurious, Kerr-induced signal is a major source of long-term drift in current, state-of-the-art, fiber optic rotation sensing interferometers. Thus, there exists a need to reduce or eliminate the Kerr-induced phase difference in fiber optic interferometers, particularly in those requiring high sensing accuracies, such as in inertial navigation grade, rotation sensors.

Summary of the invention

The present invention provides a rotation sensing interferometer in which errors caused by the Kerr effect are reduced or eliminated by intensity modulating each of the counter-propagating waves in accordance with a specific waveform. According to the present invention a rotation sensing interferometer comprises a light source, a loop of fiber optic material, and a means for coupling light from said source to said loop, said coupling means splitting said light from said source into first and second waves which counter-propagate through said loop with unequal intensities, and is characterised by means for intensity modulating the light waves to vary the intensity of each of said counter-propagating waves in accordance with a waveform that satisfies the equation: the average value of the square of the waveform intensity is equal to a constant times the average value of the waveform intensity squared, said constant having a value between 1.6 and 2.4. The basis for this relationship is expressed, mathematically, hereinbelow in connection with Equations 16 to 25. If the counter-propagating waves are modulated, according to equation 16, the non-reciprocal, intensity weighted average of the Kerr-induced phase accumulated by each wave during traverse of the interferometer loop will be equal, so that the Kerr-induced errors will be zero, thus providing perfect Kerr effect compensation.

By compensating for the Kerr effect according to the present invention, a major source of sensing error is eliminated. It is believed that this is a major breakthrough for the development of inertial navigation grade fiber optic rotation sensors for use in gyroscopes.

Brief description of the drawings

These and other advantages of the present invention are best understood through reference to the drawings, in which:

Figure 1 is a schematic drawing of the rotation sensor of the present invention showing the fiber optic components positioned along a continuous, uninterrupted strand of fiber optic material, and further showing the signal generator, photodetector, lock-in amplifier, and display associated with the detection system;

Figure 2 is a sectional view of one embodiment of a fiber optic directional coupler for use in the rotation sensing interferometer of Figure 1;

Figure 3 is a sectional view of one embodiment of a fiber optic polarizer for use in the rotation sensor of Figure 1;

Figure 4 is a perspective view of one embodiment of a fiber optic polarization controller for use in the rotation sensor of Figure 1;

Figure 5 is a schematic diagram of the rotation sensor of Figure 1 with the polarizer, polarization controllers, and phase modulator removed therefrom;

Figure 6 is a graph of the intensity of the optical output signal, as measured by the photodetector as a function of the rotationally induced Sagnac phase difference, illustrating the effects of birefringence-induced phase differences and birefringence-induced amplitude fluctuations;

Figure 7 is a graph of phase difference as a function of time showing the phase modulation of each of the counter-propagating waves and the phase difference between the counter-propagating waves;

Figure 8 is a schematic drawing illustrating the effect of the phase modulation upon the intensity of the optical output signal, as measured by the detector, when the loop is at rest;

Figure 9 is a schematic drawing showing the effect of the phase modulation upon the intensity of the optical output signal, as measured by the detector, when the loop is rotating;

Figure 10 is a graph of the amplifier output signal as a function of the rotationally-induced Sagnac phase difference, illustrating an operating range for the rotation sensor of Figure 1; and

Figure 11 is a simplified schematic drawing of a pair of square wave, intensity modulated lightwaves, counter-propagating through the loop of fiber optic material, and having substantially dissimilar peak intensities, to illustrate the intensity-independent Kerr effect compensation of the present invention.

Detailed description of the preferred embodiment

In addition to Kerr effect compensating means, the preferred embodiment of the present invention also includes a synchronous detection system for detecting the intensity of the optical output signal to indicate rotation rate, and a polarization controlling system to maintain the polarization of the light in the fiber loop. The polarization control and synchronous detection systems are appropriate for use with the Kerr effect compensation of the present invention, and contribute to the overall performance of the rotation sensing interferometer described herein. The preferred embodiment will first be described in reference to these systems, and subsequently, a detailed description directed specifically to Kerr effect compensation will be provided. However, it should be understood at the outset that the Kerr effect compensation of the present invention has general application, and may be utilized in ring interferometers other than the type described in reference to the preferred embodiment.

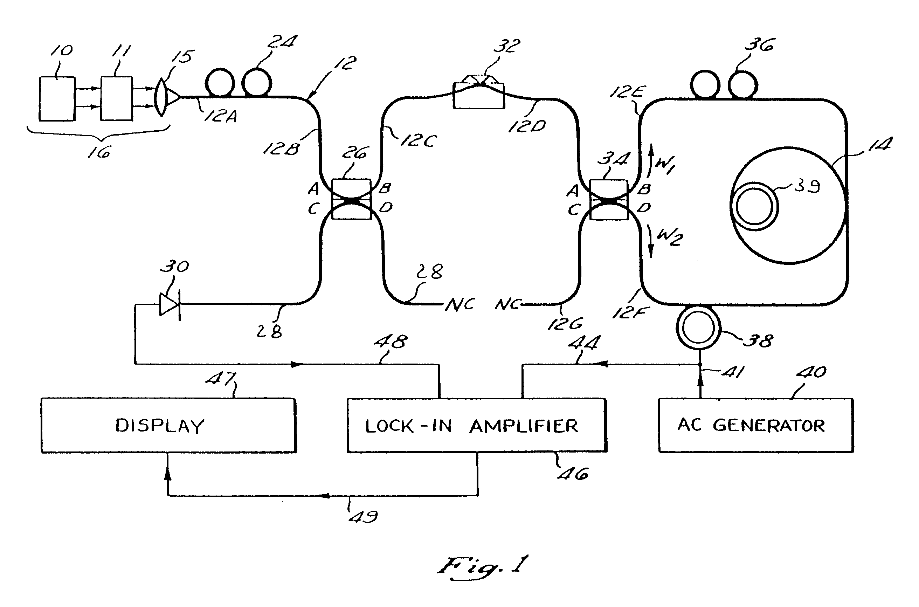

As shown in Figure 1, the rotation sensing interferometer of the preferred embodiment comprises a laser 10 and amplitude modulator 11 for introducing amplitude modulated light into a continuous length or strand of optical fiber 12, a portion of which is wound into a sensing loop 14. As used herein, the reference numeral 12 designates generally the entire continuous strand of optical fiber, while the numeral 12 with letter suffixes (A, B, C, etc.) designates portions of the optical fiber 12.

In the embodiment shown, the laser 10 comprises a Helium Neon (HeNe) laser which oscillates in a single mode and produces light having a wavelength of the order of 0.633 μm. By way of specific example, the laser 10 may comprise a Model 100 HeNe laser, commercially available from Coherent, Tropel Division, Fairport, New York. Light from the laser 10, having, e.g., a peak power of 100 microwatts, passes through the amplitude modulator 11, which is an electro-optic modulator comprising a $LiTaO_3$ crystal and a polarizer biased for an on-off ratio between 10 and 20 dB and driven by a 1.1 MHz square wave with an 80 nsec rise time. The modulated light from the source 16 will be referred to herein as $I_0$ (t).

The fiber optic strands, such as the strand 12, may comprise single mode fibers having, for example, an outer diameter of 80 μm and a core diameter of 4 μm. The loop 14 comprises a plurality of turns of the fiber 12, wrapped about a spool or other suitable support (not shown). By way of specific example, the loop 14 may have approximately 1,000 turns of fiber wound on a form having a diameter of 14 centimeters.

Preferably, the loop 14 is wound symmetrically, starting from the center, so that symmetrical points in the loop 14 are in proximity. Specifically, the fiber is wrapped about the spool so that the turns of the central portion of the loop 14 are positioned innermost adjacent to the spool and the turns towards the ends of the loop are positioned outermost away from the spool so that both end portions of the fiber loop 14 are positioned symmetrically about the central turns and are freely accessible at the outside of the loop 14. It is believed that this reduces the environmental sensitivity of the rotation sensor, since such symmetry causes time varying temperature and pressure gradients to have a similar effect on both of the counter-propagating waves.

Modulated light from the laser 10 and modulator 11 is optically coupled to one end of the fiber 12 by a lens 15. The laser 10, modulator 11, and lens 15 will be referred to collectively as the light source 16. Various components for guiding and processing the light are positioned or formed at various locations along the continuous strand 12. For the purpose of describing the relative locations of these components, the continuous fiber 12 will be described as being divided into seven portions, labelled 12A through 12G, respectively, with the portions 12A through 12E being on the side of the loop 14 that is coupled to the source 16, and the portions 12F and 12G being on the opposite side of the loop 14.

Adjacent to the light source 16, between the fiber portions 12A and 12B, is a polarization controller 24.

A description of the polarization controller 24 will be provided subsequently, however, it should be presently understood that this controller 24 permits adjustment of both the state and direction of polarization of the applied light.

The fiber 12 then passes through ports, labelled A and B, of a directional coupler 26, located between the fiber portions 12B and 12C, for coupling optical power to a second strand of optical fiber 28 which passes through the ports labelled C and D of the coupler 26, the port C being on the same side of the coupler as the port A, and the port D being on the same side of the coupler as the port B. The end of the fiber 28 extending from the port D terminates non-reflectively at the point labelled "NC" (for "not connected") while the end of the fiber 28 extending from the port C is optically coupled to a photodetector 30. By way of specific example, the photodetector 30 may comprise a standard, reverse biased, silicon, pin-type photodiode. A coupler suitable for use in the present invention is described in detail in European patent application EP—A—0074789, entitled "Fiber Optic Directional Coupler".

After passing through the polarizer 32, the fiber 12 passes through ports, labelled A and B, of a directional coupler 34, located between the fiber portions 12D and 12E. This coupler 34 is preferably of the same type as described above in reference to the coupler 26. The fiber 12 is then wound into the loop 14, with a polarization controller 36 located between the loop 14 and fiber portion 12E. This polarization controller 36 may be of the type discussed in reference to the controller 24, and is utilized to adjust the polarization of the waves counter-propagating through the loop 14 so that the optical output signal, formed by superposition of these waves, has a polarization which will be efficiently passed, with minimal optical power loss, by the polarizer 32. Thus, by utilizing both the polarization controllers 24, 36, the polarization of the light propagating through the fiber 12 may be adjusted for maximum optical power.

A phase modulator 38, driven by an AC generator 40, and connected thereto by a line 41, is mounted on the fiber 12, between the loop 14 and the fiber portion 12F. This modulator 38 comprises a PZT cylinder, around which the fiber 12 is wrapped. The fiber 12 is bonded to the cylinder so that when it expands radially in response to the modulating signal from the generator 40, it stretches the fiber 12. An alternative type of phase modulator (not shown), suitable for use with the present invention, comprises a PZT cylinder which longitudinally stretches four segments of the fiber 12 bonded to short lengths of capillary tubing at the ends of the cylinder. Those skilled in the art will recognize that this alternative type of modulator may impart a lesser degree of polarization modulation to the propagating optical signal than the modulator 38, however, it will be seen subsequently that the phase modulator 38 may be operated at a frequency which eliminates the undesirable effects of phase modulator-induced polarization modulation. Thus, either type of phase modulator is suitable for use in the present invention.

A second phase modulator 39, similar to the modulator 38, but operating at a different frequency, is mounted at the center of the loop 14. This modulator 39 is utilized to reduce the effects of backscattered light, as discussed hererinafter.

The fiber 12 then passes through ports, labelled C and D of the coupler 34, with the fiber portion 12F extending from the port D and the fiber portion 12G extending from the port C. Fiber portion 12G terminates non-reflectively at a point labelled "NC" (for "not connected"). The output signal from the AC generator 40 is supplied on a line 44 to a lock-in amplifier 46, which also is connected to receive the output of the photodetector 30 by a line 48. This signal to the amplifier 46 provides a reference signal for enabling the amplifier 46 to synchronously detect the detector output signal at the modulation frequency. Thus, the amplifier 46 effectively provides a bandpass filter at the fundamental frequency (i.e., first harmonic) of the phase modulator 38, blocking all other harmonics of this frequency. The detected signal is integrated over a period of time, typically on the order of 1 second to 1 hour, to average out random noise. It will be seen below that the magnitude of this first harmonic component of the detector output signal is proportional, through an operating range, to the rotation rate of the loop 14. The amplifier 46 outputs a signal, which is proportional to this first harmonic component, and thus provides a direct indication of the rotation rate, which may be visually displayed on a display panel 47 by supplying the amplifier output signal to the display 47 on a line 49.

The couplers 26 and 34

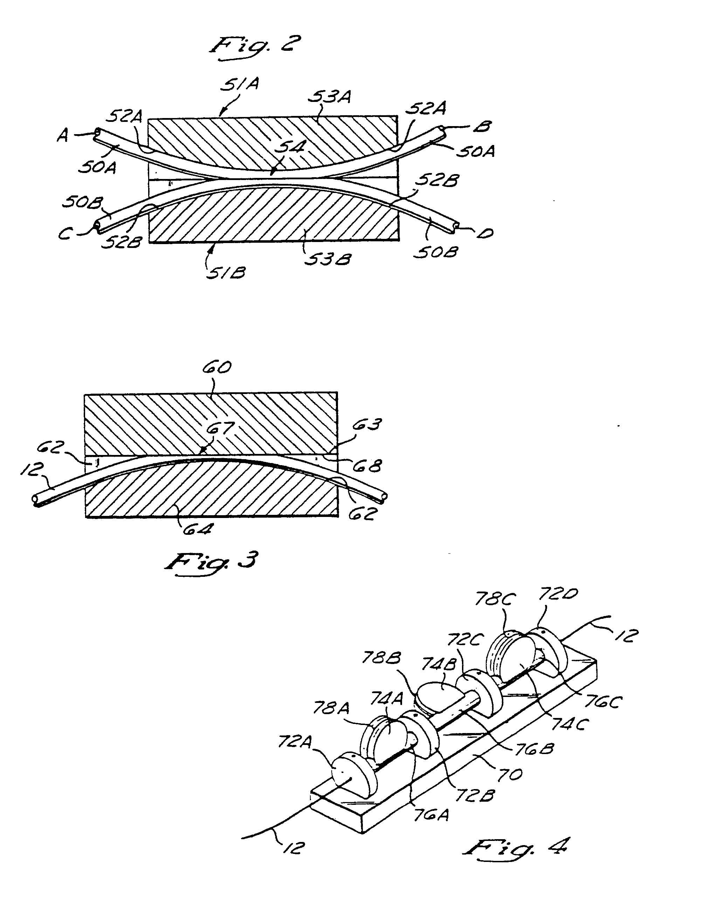

A preferred fiber optic directional coupler for use as the couplers 26 and 34 in the rotation sensor or gyroscope of the present invention is illustrated in Figure 2. The coupler includes two strands 50A and 50B of a single mode fiber optic material mounted in longitudinal arcuate grooves 52A and 52B, respectively, formed in optically flat, confronting surfaces of rectangular bases or blocks 53A and 53B, respectively. The block 53A with the strand 50A mounted in the groove 52A will be referred to as the coupler half 51A, and the block 53B with the strand 50B mounted in the groove 52B will be referred to as the coupler half 51B.

The arcuate grooves 52A and 52B have a radius of curvature which is very large compared to the diameter of the fibers 50, and have a width slightly larger than the fiber diameter to permit the fibers 50, when mounted therein, to conform to a path defined by the bottom walls of the grooves 52. The depth of the grooves 52A and 52B varies from a minimum at the center of the blocks 53A and 53B, respectively, to a maximum at the edges of the blocks 53A and 53B, respectively. This advantageously permits the fiber optic strands 50A and 50B, when mounted in the grooves 52A and 52B, respectively, to gradually converge toward the center and diverge toward the edges of the blocks 53A, 53B, thereby eliminating any sharp bends or abrupt changes in direction of the fibers 50 which may cause power loss through mode perturbation. In the embodiment shown, the grooves 52 are rectangular in cross-section, however, it will be understood that other suitable cross-sectional contours which will accommodate the fibers 50 may be used alternatively, such as a U-shaped cross-section or a V-shaped cross-section.

At the centers of the blocks 53, in the embodiment shown, the depth of the grooves 52 which mount the strands 50 is less than the diameter of the strands 50, while at the edges of the blocks 53, the depth of the grooves 52 is preferably at least as great as the diameter of the strands 50. Fiber optic material was removed from each of the strands 50A and 50B, e.g., by lapping to form respective oval-shaped planar surfaces, which are coplanar with the confronting surfaces of the blocks 53A, 53B. These oval surfaces, where the fiber optic material has been removed, will be referred to herein as the fiber "facing surfaces". Thus, the amount of fiber optic material removed increases gradually from zero towards the edges of the blocks 53 to a maximum towards the center of the blocks 53. This tapered removal of the fiber optic material enables the fibers to converge and diverge gradually, which is advantageous for avoiding backward reflection and excess loss of light energy.

In the embodiment shown, the coupler halves 51A and 51B are identical, and are assembled by placing the confronting surfaces of the blocks 53A and 53B together, so that the facing surfaces of the strands 50A and 50B are in facing relationship.

An index matching substance (not shown), such as index matching oil, is provided between the confronting surfaces of the blocks 53. This substance has a refractive index approximately equal to the refractive index of the cladding, and also functions to prevent the optically flat surfaces from becoming permanently locked together. The oil is introduced between the blocks 53 by capillary action.

An interaction region 54 is formed at the junction of the strands 50, in which light is transferred between the strands by evanescent field coupling. It has been found that, to ensure proper evanescent field coupling, the amount of material removed from the fibers 50 must be carefully controlled so that the spacing between the core portions of the strands 50 is within a predetermined "critical zone". The evanescent fields extend into the cladding and decrease rapidly with distance outside their respective cores. Thus, sufficient material should be removed to permit each core to be positioned substantially within the evanescent field of the other. If too little material is removed, the cores will not be sufficiently close to permit the evanescent fields to cause the desired interaction of the guided modes, and thus, insufficient coupling will result. Conversely, if too much material is removed, the propagation characteristics of the fibers will be altered, resulting in loss of light energy due to mode perturbation. However, when the spacing between the cores of the strands 50 is within the critical zone, each strand receives a significant portion of the evanescent field energy from the other strand, and good coupling is achieved without significant energy loss. The critical zone includes that area in which the evanescent fields of the fibers 50A and 50B overlap with sufficient strength to provide coupling, i.e., each core is within the evanescent field of the other. However, as previously indicated, mode perturbation occurs when the cores are brought too close together. For example, it is believed that, for weakly guided modes, such as the $HE_{11}$ mode in single mode fibers, such mode perturbation begins to occur when sufficient material is removed from the fibers 50 to expose their cores. Thus, the critical zone is defined as that area in which the evanescent fields overlap with sufficient strength to cause coupling without substantial mode perturbation induced power loss.

The extent of the critical zone for a particular coupler is dependent upon a number of interrelated factors such as the parameters of the fiber itself and the geometry of the coupler. Further, for a single mode fiber having a step-index profile, the critical zone can be quite narrow. In a single mode fiber coupler of the type shown, the required center-to-center spacing between the strands 50 at the center of the coupler is typically less than a few (e.g., 2—3) core diameters.

Preferably, the strands 50A and 50B (1) are identical to each other; (2) have the same radius of curvature at the interaction region 54; and (3) have an equal amount of fiber optic material removed therefrom to form their respective facing surfaces. Thus, the fibers 50 are symmetrical, through the interaction region 54, in the plane of their facing surfaces, so that their facing surfaces are coextensive if superimposed. This ensures that the two fibers 50A and 50B will have the same propagation characteristics at the interaction region 54, and thereby avoids coupling attenuation associated with dissimilar propagation characteristics.

The blocks or bases 53 may be fabricated of any suitable rigid material. In one presently preferred embodiment, the bases 53 comprise generally rectangular blocks of fused quartz glass approximately 1 inch (2.54 cm) long, 1 inch (2.54 cm) wide, and 0.4 inch (1.016 cm) thick. In this embodiment, the fiber optic strands 50 are secured in the slots 52 by suitable cement, such as epoxy glue. One advantage of the fused quartz blocks 53 is that they have a coefficient of thermal expansion similar to that of glass fibers, and this advantage is particularly important if the blocks 53 and fibers 50 are subjected to any heat treatment during the manufacturing process. Another suitable material for the block 53 is silicon, which also has excellent thermal properties for this application.

The coupler includes four ports, labelled A, B, C and D, in Figure 2. When viewed from the perspective of Figure 2, ports A and C, which correspond to strands 50A and 50B, respectively, are on the left-hand side of the coupler, while the ports B and D, which correspond to the strands 50A and 50B, respectively, are on the right-hand side of the coupler. For the purposes of discussion, it will be assumed that input light is applied to port A. This light passes through the coupler and is output at port B and/or port D, depending

5

upon the amount of power that is coupled between the strands 50. In this regard, the term "normalized coupled power" is defined as the ratio of the coupled power to the total output power. In the above example, the normalized coupled power would be equal to the ratio of the power at port D of the sum of the power output at ports B and D. This ratio is also referred to as the "coupling efficiency", and when so used, is typically expressed as a percent. Thus, when the term "normalized coupled power" is used herein, it should be understood that the corresponding coupling efficiency is equal to the normalized coupled power times 100. In this regard, tests have shown that the coupler of the type shown in Figure 2 has a coupling efficiency of up to 100%. However, the coupler may be "tuned" to adjust the coupling efficiency to any desired value between zero and the maximum, by offsetting the facing surfaces of the blocks 53. Such tuning is preferably accomplished by sliding the blocks 53 laterally relative to each other.

The coupler is highly directional, with substantially all of the power applied at one side of the coupler being delivered to the other side of the coupler. That is, substantially all of the light applied to input Port A is delivered to the output Ports B and D, without contra-directional coupling to Port C. Likewise, substantially all of the light applied to input Port C is delivered to the output Ports B and D. Further, this directivity is symmetrical. Thus, light supplied to either input Port B or input Port D is delivered to the output Ports A and C. Moreover, the coupler is essentially non-discriminatory with respect to polarizations, and thus, preserves the polarization of the coupled light. Thus, for example, if a light beam having a vertical polarization is input to Port A, the light coupled from Port A to Port D, as well as the light passing straight through from Port A to Port B, will remain vertically polarized.

From the foregoing, it can be seen that the coupler may function as a beam-splitter to provide the applied light into two counter-propagating waves W1, W2 (Figure 1). Further, the coupler may additionally function to recombine the counter-propagating waves after they have traversed the loop 14 (Figure 1).

In the embodiment shown, each of the couplers 26, 34 has a coupling efficiency of 50%, as this choice of coupling efficiency provides maximum optical power at the photodetector 30 (Figure 1). As used herein, the term "coupling efficiency" is defined as the power ratio of the coupled power to the total output power, expressed as a percent. For example, referring to Figure 2, if light is applied to Port A, the coupling efficiency would be equal to the ratio of the power at Port D to the sum of the power output at Ports B and D. The terms "coupling ratio" or "splitting ratio" are defined as the coupling efficiency divided by 100. Thus, a coupling efficiency of 50% could be equivalent to a coupling ratio or splitting ratio of 0.5.

The polarizer 32

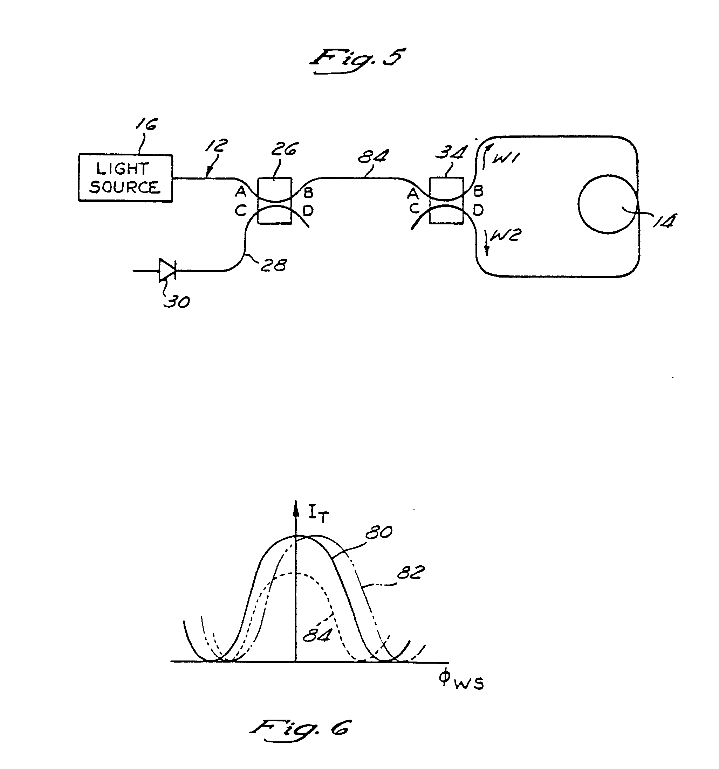

A preferred polarizer for use in the rotation sensor of Figure 1 is illustrated in Figure 3. This polarizer includes a birefringent crystal 60, positioned within the evanescent field of light transmitted by the fiber 12. The fiber 12 is mounted in a slot 62 which opens to the upper face 63 of a generally rectangular quartz block 64. The slot 62 has an arcuately curved bottom wall, and the fiber is mounted in the slot 62 so that it follows the contour of this bottom wall. The upper surface 63 of the block 64 is lapped to remove a portion of the cladding from the fiber 12 in a region 67. The crystal 60 is mounted on the block 64, with the lower surface 68 of the crystal facing the upper surface 63 of the block 64, to position the crystal 60 within the evanescent field of the fiber 12.

The relative indices of refraction of the fiber 12 and the birefringent material 60 are selected so that the wave velocity of the desired polarization mode is greater in the birefringent crystal 60 than in the fiber 12, while the wave velocity of an undesired polarization mode is greater in the fiber 12 than in the birefringent crystal 60. The light of the desired polarization mode remains guided by the core portion of the fiber 12, whereas light of the undesired polarization mode is coupled from the fiber 12 to the birefringent crystal 60. Thus, the polarizer 32 permits passage of light in one polarization mode, while preventing passage of light in the other polarization mode. As previously indicated, the polarization controllers 24, 36 (Figure 1) may be utilized to adjust the polarizations of the applied light and optical output signal, respectively, so that optical power loss through the polarizer is minimized.

The polarization controllers 24, 36

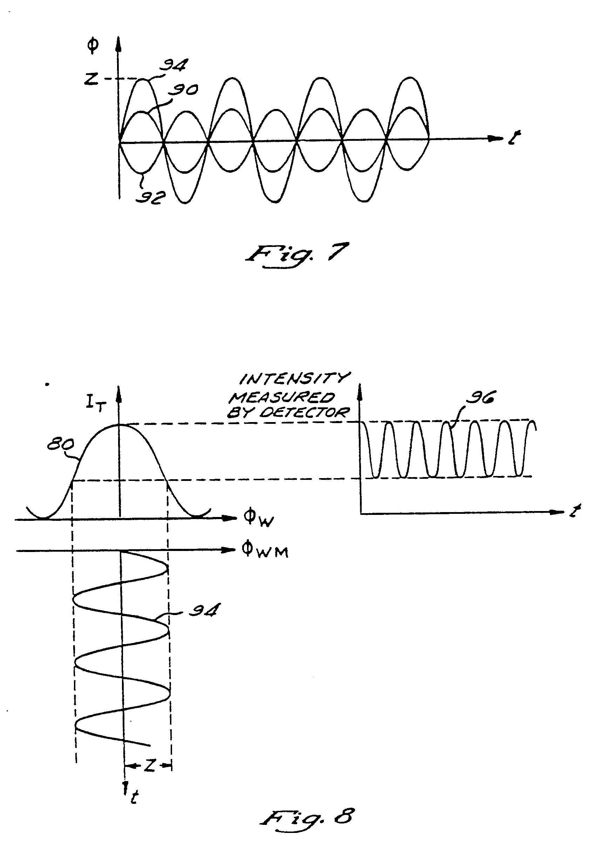

One type of polarization controller suitable for use in the rotation sensor of Figure 1 is illustrated in Figure 4. The controller includes a base 70 on which a plurality of upright blocks 72A through 72D are mounted. Between adjacent ones of the blocks 72, spools 74A through 74C are tangentially mounted on shafts 76A through 76C, respectively. The shafts 76 are axially aligned with each other, and are rotatably mounted between the blocks 72. The spools 74 are generally cylindrical and are positioned tangentially to the shafts 76, with the axes of the spools 74 perpendicular to the axes of the shafts 76. The strand 12 extends through axial bores in the shafts 76 and is wrapped about each of the spools 74 to form three coils 78A through 78C. The radii of the coils 78 are such that the fiber 12 is stressed to form a birefringent medium in each of the coils 78. The three coils 78A through 78C may be rotated independently of each other about the axes of the shafts 74A through 74C, respectively, to adjust the birefringence of the fiber 12 and, thus, control the polarization of the light passing through the fiber 12.

The diameter and number of turns in the coils 78 are such that the outer coils 78A and C provide a spatial delay of one-quarter wavelength, while the central coil 78B provides a spatial delay of one-half wavelength. The quarter wavelength coils 78A and C control the ellipticity of the polarization, and the half wavelength coil 78B controls the direction of polarization. This provides a full range of adjustment of the

# 0 109 394

polarization of the light propagating through the fiber 12. It will be understood, however, that the polarization controller may be modified to provide only the two quarter wave coils 78A and C, since the direction of polarization (otherwise provided by the central coil 78B) may be controlled indirectly through proper adjustment of the ellipticity of polarization by means of the two quarter wave coils 78A and C. Accordingly, the polarization controllers 24 and 36 are shown in Figure 1 as including only the two quarter wave coils 78A and C. Since this configuration reduces the overall size of the controllers 24—36, it may be advantageous for certain applications of the present invention involving space limitations.

Thus, the polarization controllers 24 and 36 provide means for establishing, maintaining, and controlling the polarization of both the applied light and the counter-propagating waves.

## Operation without phase modulation or polarization control

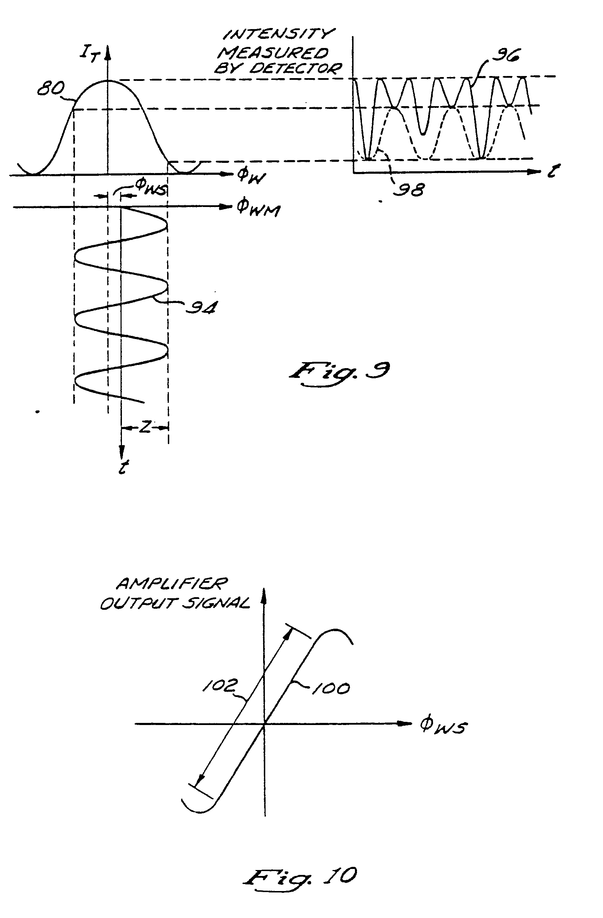

In order to fully understand the function and importance of the polarizer 32 (Figure 1) and phase modulator 38, the operation of the rotation sensor will first be described as if these components had been removed from the system. Accordingly, Figure 5 shows the rotation sensor of Figure 1, in schematic block diagram form, with the modulator 38, polarizer 32, and associated components removed therefrom.

Light is coupled from the source 16 to the fiber 12 for propagation therethrough. The light enters Port A of the coupler 26, where a portion of the light is lost through Port D. The remaining portion of the light propagates from Port B of the coupler 26 to Port A of the coupler 34, where it is split into two counter-propagating waves W1, W2. The wave W1 propagates from the Port B in a clockwise direction about the loop 14, while the wave W2 propagates from Port D in a counter-clockwise direction around the loop 14. After the waves W1, W2 have traversed the loop 14, they are recombined by the coupler 34 to form an optical output signal, which propagates from Port A of the coupler 34 to Port B of the coupler 26. A portion of the optical output signal is coupled from Port B to Port C of the coupler 26 for propagation along the fiber 28 to the photodetector 30. This photodetector 30 outputs an electrical signal which is proportional to the intensity of the light impressed thereon by the optical output signal.

The intensity of the optical output signal will vary in accordance with the amount and type (i.e., constructive or destructive) of interference between the waves W1, W2 when they are recombined or superposed at the coupler 34. Ignoring, for the moment, the effects of fiber birefringence, the waves W1, W2 travel the same optical path around the loop 14. Thus, assuming the loop 14 is at rest, when the waves W1, W2 are recombined at the coupler 34, they will interfere constructively, with no phase difference therebetween, and the intensity of the optical output signal will be at a maximum. However, when the loop 14 is rotated, the counter-propagating waves W1, W2 will be shifted in phase, in accordance with the Sagnac effect, so that when they are superposed at the coupler 34, they destructively interfere to reduce the intensity of the optical output signal. Such Sagnac phase difference between the waves W1, W2, caused by rotation of the loop 14, is defined by the following relationship:

$$\phi_{ws} = \frac{8\eta NA}{\lambda c}\Omega \tag{1}$$

Where A is the area bounded by the loop 14 of optical fiber, N is the number of turns of the optical fiber about the area, A, $\Omega$ is the angular velocity of the loop about an axis which is perpendicular to the plane of the loop, and $\lambda$ and c are the free space values of the wavelength and velocity, respectively, of the light applied to the loop.

The intensity of the optical output signal ($I_T$) is a function of the Sagnac phase difference ($\phi_{ws}$) between the waves W1, W2, and is defined by the following equation:

$$I_T = I_1 + I_2 + 2\sqrt{I_1 I_2}\ \cos\phi_{ws} \tag{2}$$

where $I_1$ and $I_2$ are the individual intensities of the waves W1, W2, respectively.

From Equations (1) and (2), it may be seen that the intensity of the optical output signal is a function of the rotation rate ($\Omega$). Thus, an indication of such rotation rate may be obtained by measuring the intensity of the optical output signal, utilizing the detector 30.

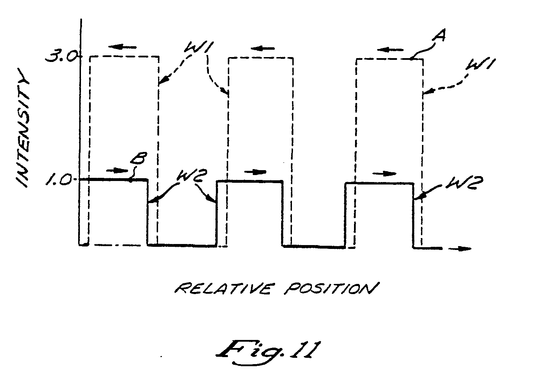

Figure 6 shows a curve 80, which illustrates this relationship between the intensity of the optical output signal ($I_T$) and the Sagnac phase difference ($\phi_{ws}$) between the counter-propagating waves W1, W2. The curve 80 has the shape of a cosine curve, and the intensity of the optical output signal is at a maximum when the Sagnac phase difference ($\phi_{ws}$) is zero.

If it is assumed that the only source of phase difference between the counter-propagating waves W1, W2 is the rotation of the loop 14, the curve 80 will vary symmetrically about the vertical axis. However, in practice, a phase difference between the counter-propagating waves W1, W2 may be caused not only by rotation of the loop 14, but also by the residual birefringence of the optical fiber 12. Birefringence-induced phase differences occur because fiber birefringence tends to cause each of the two polarization modes of the single mode fiber 12 to propagate light at a different velocity. This creates a non-reciprocal, non-rotationally induced phase difference between the waves W1, W2, which causes the waves W1, W2 to interfere in a manner that distorts or shifts the curve 80 of Figure 6, for example, as illustrated by the curve

7

82, shown in phantom lines. Such birefringence-induced, non-reciprocal phase difference is indistinguishable from a rotationally-induced Sagnac phase difference, and is dependent on environmental factors which vary fiber birefringence, such as temperature and pressure. Thus, fiber birefringence may cause errors in rotation sensing.

Operation with the polarizer 32

The problem of non-reciprocal operation due to fiber birefringence is solved by means of the polarizer 32 (Figure 1), which, as discussed above, permits utilization of only a single polarization mode. Thus, when the polarizer 32 is introduced into the system, at the point designated by the reference numeral 84 in Figure 5, light input through the polarizer 32 propagates into the loop 14 in the desired polarization mode. Further, when the counter-propagating waves are recombined to form the optical output signal, any light that is not of the same polarization as the light applied to the loop is prevented from reaching the photodetector 30, since the optical output signal, as it travels from Port A of coupler 34 to Port B of coupler 26, also passes through the polarizer 32. Thus, the optical output signal, when it reaches the detector 30, will have precisely the same polarization as the light applied to the loop. Therefore, by passing the input light and optical output signal through the same polarizer 32, only a single optical path is utilized, thereby eliminating the problem of birefringence-induced phase difference. Further, it should be noted that the polarization controllers 24, 36 (Figure 1) may be used to adjust the polarization of the applied light, and optical output signal, respectively, to reduce optical power loss at the polarizer 32, and thus, maximize the signal intensity at the detector 30.

Operation with the phase modulator 38

Referring again to Figure 6, it will be seen that, because the curve 80 is a cosine function, the intensity of the optical output signal is nonlinear for small phase differences ($\phi_{ws}$) between the waves W1, W2. Further, the optical output signal intensity is relatively insensitive to changes in phase difference, for small values of $\phi_{ws}$. Such nonlinearity and insensitivity makes it difficult to transform the optical intensity ($I_T$) measured by detector 30 into a signal indicative of the rate of rotation $\Omega$ (Equation 1) of the loop 14.

Further, although birefringence-induced phase differences between the waves W1, W2 are eliminated, as discussed above, by use of the polarizer 32, fiber birefringence may also cause a reduction in the optical intensity of the optical output signal, since light may be prevented from reaching the photodetector 30 by the polarizer 32. Thus, changes in fiber birefringence may cause the amplitude of the curve 80 of Figure 6 to vary, for example, as illustrated by the curve 84.

The foregoing problems are solved by means of a synchronous detection system utilizing the phase modulator 38, signal generator 40, and lock-in amplifier 46, shown in Figure 1. Referring to Figure 7, the phase modulator 38 modulates the phase of each of the propagating waves W1, W2 at the frequency of the signal generator 40. However, as may be seen from Figure 1, the phase modulator 38 is located at one end of the loop 14. Thus, the modulation of the wave W1 is not necessarily in phase with the modulation of the wave W2. Indeed, it is necessary for proper operation of this synchronous detection system that the modulation of the waves W1, W2 be out of phase. Referring to Figure 7, it is preferable that the modulation of the wave W1, represented by the sinusoidal curve 90, be 180 degrees out of phase with the modulation of the wave W2, represented by the curve 92. Use of a modulation frequency which provides such 180-degree phase difference between the modulation of the wave W1 relative to that of W2 is particularly advantageous in that it eliminates modulator-induced amplitude modulation in the optical output signal measured by the detector 30. This modulation frequency ($f_m$) may be calculated using the following equation:

$$f_m = \frac{c}{2 n_{eq} L} \tag{3}$$

where L is the differential fiber length, between the coupler 34 and modulator 38, for the counter-propagating waves W1, W2 (i.e., the distance, measured along the fiber, between the modulator 38 and a symmetrical point on the other side of the loop 14); $n_{eq}$ is the equivalent refractive index for the single mode fiber 12, and c is the free space velocity of the light applied to the loop 14.

At this modulation frequency ($f_m$), the phase difference ($\phi_{wm}$) between the counter-propagating waves W1, W2, due to phase modulation of these waves in accordance with the curves 90 and 92, is illustrated by the sinusoidal curve 94 in Figure 7. This modulation of the phase difference between the waves W1, W2 will modulate the intensity ($I_T$) of the optical output signal in accordance with the curve 80 of Figure 6, since such phase modulation $\phi_{wm}$ is indistinguishable from rotationally-induced Sagnac phase differences $\phi_{ws}$.

The foregoing may be understood more fully through reference to Figures 8 and 9 which graphically illustrate the effect of (a) the phase modulation $\phi_{wm}$, defined by the curve 94 of Figure 7, and (b) the Sagnac phase difference $\phi_{ws}$, upon the intensity ($I_T$) of the optical output signal, represented by the curve 80 of Figure 6. However, before proceeding with a discussion of Figures 7 and 8, it should first be understood that the intensity ($I_T$) of the modulated optical output signal is a function of the total phase difference between the waves W1, W2. Further, such total phase difference is comprised of both the rotationally-induced Sagnac phase difference $\phi_{ws}$ and the time varying modulation-induced phase difference $\phi_{wm}$. Thus, the total phase difference $\phi_w$ between the waves W1, W2 may be expressed as follows:

$$\phi_w = \phi_{ws} + \phi_{wm} \tag{4}$$

Accordingly, since the effects of the modulation-induced phase difference $\phi_{wm}$, as well as the rotationally-induced phase difference $\phi_{ws}$, will be considered in reference to Figures 8 and 9, the horizontal axis for the curve 80 has been relabelled as $\phi_w$ to indicate that the total phase difference is being considered, rather than only the rotationally-induced phase difference, as in Figure 6.

Referring now to Figure 8, the effect of the phase modulation $\phi_{wm}$ (curve 94) upon the intensity $I_T$ of the optical output signal (curve 80) will be discussed. In Figure 8, it is assumed that the loop 14 is at rest, and thus, the optical signal is not affected by the Sagnac effect. Specifically, it may be seen that the modulation-induced phase difference curve 94 varies the optical output signal in accordance with the curve 80, symmetrically about its vertical axis, so that the optical intensity measured by the detector 30 varies periodically at a frequency equal to the second harmonic of the modulating frequency, as shown by the curve 96. Since, as discussed above, the lock-in amplifier 46 is enabled by the signal generator 40 (Figure 1) to synchronously detect the detector output signal at the modulation frequency (i.e., first harmonic) of the modulator 38, and since the detector output signal is at the second harmonic of the modulation frequency, as shown by the curve 96, the amplifier output signal will be zero and the display 47 will indicate a rotation rate of zero. It should be noted that, even if birefringence-induced amplitude fluctuations occur in the optical output signal, as discussed in reference to the curve 84 of Figure 6, the curve 96 of Figure 8 will remain at a second harmonic frequency. Thus, such birefringence-induced amplitude fluctuations will not affect the amplifier 46 output signal. The detection system, therefore, provides a substantially stable operating point that is insensitive to changes in birefringence, particularly when the loop 14 is at rest.

When the loop 14 is rotated, the counter-propagating waves W1, W2 are shifted in phase, as discussed above, in accordance with the Sagnac effect. The Sagnac phase shift provides a phase difference $\phi_{ws}$ which adds to the phase difference $\phi_{wm}$ created by the modulator 38, so that the entire curve 94 is translated in phase from the position shown in Figure 8, by an amount equal to $\phi_{ws}$, to the position shown in Figure 9. This causes the optical output signal to vary non-symmetrically in accordance with the curve 80, thereby harmonically distorting this signal, as shown by the curve 96 of Figure 9, so that it includes a component at the fundamental (i.e., first harmonic) frequency of the modulator 38, as illustrated in phantom lines by the sinusoidal curve 98. It will be seen subsequently that the RMS value of this sinusoidal curve 98 is proportional to the sine of the rotationally-induced, Sagnac phase difference $\phi_{ws}$. Since the amplifier 46 synchronously detects signals having the fundamental frequency of the modulator 38, the amplifier 46 will output a signal to the display 47 that is proportional to the RMS value of the curve 98 to indicate the rotation rate of the loop.

The drawings of Figure 9 illustrate the intensity waveform of the optical output signal for one direction of rotation (e.g., clockwise) of the loop 14. However, it will be understood that, if the loop 14 is rotated in the opposite direction (e.g., counter-clockwise) at an equal velocity, the intensity waveform 96 of the optical output signal will be exactly the same as illustrated in Figure 9, except that it will be translated so that the curve 98 is shifted 180 degrees from the position shown in Figure 9. The lock-in amplifier 46 detects this 180-degree phase difference for the curve 98, by comparing its phase with the phase of the reference signal from the signal generator 40, to determine whether the rotation of the loop is clockwise or counter-clockwise. Depending on the direction of rotation, the amplifier 46 outputs either a positive or negative signal to the display 47. However, regardless of the direction of rotation, the magnitude of the signal is the same for equal rates of rotation of the loop 14.

The waveform of the amplifier output signal is shown in Figure 10 as the curve 100. It will be seen that this curve 100 is sinusoidal and varies positively or negatively from zero rotation rate depending on whether the rotation of the loop 14 is clockwise or counter-clockwise. Further, the curve 100 has a substantially linear portion 102 which varies symmetrically about the origin and provides a relatively wide operating rate for measuring rotation. Moreover, the slope of the curve 100 provides excellent sensitivity throughout its linear operating range 102.

Thus, by utilizing the synchronous detection system, the above-described problems of non-linearity, insensitivity, and birefringence-induced amplitude fluctuations are reduced or eliminated.

A further advantage of this detection system relates to the fact that state-of-the-art phase modulators, such as the modulator 38, induce amplitude modulation in the optical output signal, either directly, or indirectly through polarization modulation. However, it will be recalled from the discussion in reference to Equation 3 that, by operating at a specific frequency at which the phase difference between the modulation of the waves W1 and W2 is 180 degrees, the odd harmonic frequency components of the amplitude modulation, that are induced in each of the counter-propagating waves W1, W2 by the modulator 38, cancel each other when the waves are superposed to form the optical output signal. Thus, since the above-described detection system detects only an odd harmonic (i.e., the fundamental frequency) of the optical output signal, the effects of amplitude modulation are eliminated. Therefore, by operating at the specific frequency, defined by Equation 3, and detecting only an odd harmonic of the optical output signal, the rotation sensor of the present invention may operate independently of modulator-induced amplitude and polarization modulation.

A further benefit of operating at the specific frequency is that even harmonics of the phase modulation, induced by the modulator 38 in each of the counter-propagating phases W1, W2, cancel when these waves are superposed to form the optical output signal. Since these even harmonics may produce spurious odd harmonics in the optical output signal which might otherwise be detected by the detection system, their elimination improves the accuracy of rotation sensing.

In addition to operating the phase modulator 38 at the frequency, defined by Equation 3, it is also preferable to adjust the magnitude of the phase modulation so that the amplitude of the detected first harmonic of the optical output signal intensity is maximized, since this provides improved rotation sensing sensitivity and accuracy. It has been found that the first harmonic of the optical output signal intensity is at the maximum, for a given rotation rate, when the amplitude of the modulator-induced phase difference between the waves W1, W2, indicated by the dimension labelled z in Figures 7, 8, and 9, is 1.84 radians. This may be understood more fully through reference to the following equation for the total intensity ($I_T$) of two superposed waves having individual intensities of $I_1$ and $I_2$, respectively, with a phase difference $\phi_w$ therebetween.

$$I_T = I_1 + I_2 + 2\sqrt{I_1 I_2}\ \cos\phi_w \tag{5}$$

where:

$$\phi_w = \phi_{ws} + \phi_{wm} \tag{6}$$

and

$$\phi_{wm} = z\ \sin\ (2\pi f_m t) \tag{7}$$

Thus,

$$\phi_w = \phi_{ws} + z\ \sin\ (2\pi f_m t) \tag{8}$$

the Fourier expansion of cosine $\phi_w$ is:

$$\cos\ \phi_w = \cos\ \phi_{ws}\{J_0(z) + 2\ \sum_{n=1}^{\infty}\ J_{2n}(z)\cos[2\pi(2nf_m t)]\}$$

$$-\sin\ \phi_{ws}\{2\ \sum_{n=1}^{\infty}\ J_{2n-1}(z)\sin[2\pi(2n-1)f_m t]\} \tag{9}$$

where $J_n(z)$ is the $n^{th}$ Bessel function of the variable z, and z is the peak amplitude of the modulator-induced phase difference between the waves W1, W2.

Therefore, detecting only the first harmonic of $I_T$ yields:

$$I_{T(1)} = 4\sqrt{I_1 I_2}\ J_1(z)\sin\phi_{ws}\sin(2\pi f_m t) \tag{10}$$

Thus, the amplitude of the first harmonic of the optical output signal intensity is dependent upon the value of the first Bessel function $J_1(z)$. Since $J_1(z)$ is a maximum when z equals 1.84 radians, the amplitude of the phase modulation should preferably be selected so that the magnitude of the modulator-induced phase difference (z) between the waves W1, W2 is 1.84 radians.

Reducing the effects of backscatter

As is well known, present state-of-the-art optical fibers are not optically perfect, but have imperfections which cause scattering of small amounts of light. This phenomena is commonly referred to as Rayleigh scattering. Although such scattering causes some light to be lost from the fiber, the amount of such loss is relatively small, and therefore, is not a major concern. The principal problem associated with Rayleigh scattering relates not to scattered light which is lost, but rather, to light which is reflected so that it propagates through the fiber in a direction opposite to its original direction of propagation. This is commonly referred to as "backscattered" light. Since such backscattered light is coherent with the light comprising the counter-propagating waves W1, W2, it can constructively or destructively interfere with such propagating waves, and thereby cause "noise" in the system, i.e., cause spurious variations in the intensity of the optical output signal, as measured by the detector 30.

Destructive or constructive interference between the backscattered waves and the propagating waves may be reduced by means of the additional phase modulator 39 at the center of the fiber loop 14. This phase modulator is driven by a signal generator (not shown), which is not synchronized with the modulator 38.

The propagating waves will pass through this additional phase modulator 39 one time only, on their travel around the loop. For backscatter which occurs from a propagating wave before the wave reaches the additional modulator, the backscatter will not be phase modulated by this additional modulator, since neither its source propagating wave nor the backscatter itself has passed through the additional modulator.

On the other hand, for backscatter which occurs from a propagating wave after the wave passes through this additional phase modulator, the backscatter will be effectively twice phase modulated, once when the propagating wave passed through the additional phase modulator, and once the backscatter passed through the additional modulator.

Thus, if the additional phase modulator introduces a phase shift of $\phi(t)$, the backscattered wave originating at any point except at the center of the loop 14 will have a phase shift of either zero, or 2 $\phi(t)$, either of which is time varying with respect to the $\phi(t)$ phase shift for the propagating wave. This time varying interference will average out over time, effectively eliminating the effects of the backscattered light.

Kerr effect compensation

As previously indicated, the Kerr effect refers to a phenomena in which the refractive index of a substance changes when placed in a varying electric field. In optical fibers, the electric fields of lightwaves can change the refractive index, and therefore, the propagation constants of the fiber in accordance with the AC Kerr effect. The amount of Kerr effect is a function of the square of the electric fields, or the light intensity. For inertial navigation accuracies, the Kerr effect, in an interferometer such as described above, becomes a problem when the combined intensities of the waves W1, W2 are greater than about 1 watt/cm$^2$.

For waves counter-propagating through a fiber, as in a ring interferometer, the Kerr effect is more complex than if there is only a single wave, since the Kerr-induced change in propagation constant of either wave is not only a function of the intensity of the wave itself, but also of the intensity of the other wave. In this regard, the term "self effect" will be used to refer to the effect of a first of two counter-propagating waves upon the propagation constant of the first wave, while the term "cross effect" will be used to refer to the change in propagation constant of that same first wave, caused by the electric field of the second wave, propagating in the opposite direction. Stated another way, if one imagines himself as an observer, travelling with a first wave, at the same speed and in the same direction, the propagation constant of the fiber, as viewed by that observer, will be a function of the intensity of the wave he is travelling with (the self effect), and also a function of the intensity of the wave coming toward him (the cross effect). The Kerr-induced change in the propagation constants for each of the two counter-propagating waves may be described as the sum of the self effect plus the cross effect.

If the self effect and the cross effect were to influence the propagation constant by equal amounts, the propagation constant seen by each wave would be the same, regardless of the relative intensities of the two waves, and thus, each of the counter-propagating waves would traverse the loop 14 with equal propagation velocities, thus resulting in reciprocal operation of the interferometer. Unfortunately, however, the cross effect has twice the influence on the propagation constants as the self effect, and therefore, unless the respective intensities of the waves are precisely equal (so that the cross effects are equal and the self effects are equal), one of the counter-propagating waves will have a different propagation constant than the other. Consequently, their propagation velocities will be different (propagation velocity is a function of the propagation constant), and one of the waves will traverse the loop 14 more rapidly than the other, creating a phase difference between the waves when they are combined at the coupler 34. This Kerr-induced phase difference is indistinguishable from a rotationally induced (Sagnac) phase difference, and thus, results in a spurious rotation signal.

The present invention solves this problem by modulating the intensity of the lightwave applied to the fiber 12 in accordance with a specific waveform. In the case of the preferred embodiment, this waveform is a square wave having a duty cycle of 50%. By intensity modulating the applied light with a square wave, the peaks of the counter-propagating waves W1, W2 will see the same average propagation constant, even though, at a particular point on the loop 14, they may see different propagation constants. Stated another way, the accumulated phase, due to the Kerr effect for the peak of wave W1, will be equal to the accumulated phase due to the Kerr effect for the peak of wave W2, after the waves W1, W2 have traversed the loop 14 and are recombined at the coupler 34. This eliminates any Kerr-induced phase difference between the waves W1, W2 and thus, provides automatic Kerr effect compensation.

The foregoing may be understood more fully through reference to Figure 11, which schematically illustrates a pair of square wave intensity modulated counter-propagating lightwaves, each having a duty cycle of 50%. Although the following explanation may be somewhat over-simplified, it should provide some insight into the manner in which Kerr effect compensation is achieved, utilizing a square wave intensity modulated lightwave. It will be assumed, for the purpose of illustration, that the wave W1 has a peak intensity of 3 (in arbitrary units), while the wave W2 has a peak intensity of 1 (in the same arbitrary units). Both waves are at their peak intensity for half of their period, and at zero intensity for the remaining half of the period (i.e., a duty cycle of 50%). The part of the square wave that is at peak intensity will be referred to as the crest portion, while the part that is at zero intensity will be referred to as the trough portion.

Because of the Kerr effect, the propagation constant seen by the trough portion of a given wave will be different than the propagation constant seen by the crest portion of that same wave. In this particular example, the intensity of the wave at the trough portions is negligible and it will not contribute to the rotation rate error, so it may be ignored. Thus, in this example, only the propagation constant seen by the crest portions need be examined to determine the intensity weighted average phase shift of the waves.

Because of the Kerr effect, the propagation constant of the crest portions of either of the waves W1, W2 will change as the wave travels through successive crest and trough portions of the oncoming wave. For example, if one imagines an observer at an arbitrary reference point on the crest portion of the wave W1, as at point A in Figure 11, travelling with the wave W1, the propagation constant seen by that observer will be at a first value when point A is within a crest portion of the oncoming wave W2, and will be at a second value when point A is within a trough portion of the oncoming wave W2. Since the duty cycle of the wave W2 is 50%, and the observer sees trough portions and crest portions of this wave an equal amount of time, the average propagation constant of the wave W1 (e.g., seen by the observer at point A) will simply be the average of the sum of these first and second values. The situation is similar for an observer travelling with the wave W2 on its crest portion, as at the reference point B in Figure 11. The propagation constant of the wave W2 (e.g., seen by the point B observer) will change between first and second values as it travels through successive crest and trough portions of the oncoming wave W1, i.e., the propagation constant will be at a first value when point B is within a crest portion of the wave W1 and at the second value when point B is within a trough portion of the wave W1. Since the wave W1 also has a 50% duty cycle, the average propagation constant of the wave W2 (e.g., the point B observer) is the average of the sum of these first and second values. It should be noted that the first and second values for the wave W1 may be different than those for the wave W2, however, if the Kerr effect is fully compensated, the average propagation constants for the waves W1 and W2 will be the same.

The average, Kerr-induced change in propagation constants for each of the waves W1, W2 will now be calculated for the example described above in reference to Figure 11. For the wave W1, the Kerr-induced change in propagation constant $(\Delta\beta_1)$ seen, e.g., at point A, when point A is within a crest of the oncoming wave W2, may be defined as:

$$\Delta\beta_1 = k(I_1 + 2I_2) \qquad (11)$$

However, when point A is within a trough of the oncoming wave W2, the Kerr-induced change in propagation constant $(\beta n_1)$ seen by the wave W1 at point A is:

$$\beta n_1 = k(I_1) \qquad (12)$$

where $I_1$ and $I_2$ are the intensities of the waves W1, W2, respectively. The constant k is included as a proportionality constant.

From Equations 11 and 12, it may be seen that, as expected, when point A of the wave W1 is within a crest of the oncoming wave W2, there is both a self-effect (due to W1) and a cross-effect (due to W2), while, when point A is within a trough of the oncoming wave, there is only a self-effect.

Substituting the appropriate values into Equations 11 and 12, it may be seen that when point A is within a crest, the change in propagation constant is equal to 5k, and when it is within a trough, the change in refractive index is 3k. Thus, the average propagation constant of the wave W1 is equal to 4k.

For the wave W2, the change in propagation constant when point B is within a crest of the oncoming wave W1, may be defined as:

$$\Delta\beta_2 = k(I_2 + 2I_1) \qquad (13)$$

However, when point B of the wave W2 is within a trough of the oncoming wave W1, the change in propagation constant is:

$$\Delta\beta_2 = k(I_2) \qquad (14)$$

Inserting the appropriate intensity values into Equation 13, the change in propagation constant, when point B is within a crest portion of the oncoming wave, is equal to 6k. Similarly, using Equation 14, it may be found that the change in propagation constant, when point B is within a trough of the oncoming wave, is equal to 1k. Since the duty cycle is 50%, and the wave W2 has each propagation constant an equal amount of time, the average propagation constant is simply the average of 1k+7k, which is, again, 4k.

Therefore, even though the respective intensities of the waves W1, W2, in the above example, were quite different, the average change in the propagation constant for each of the waves was the same (e.g., 4k) over a complete period of square wave modulation. Using other intensities for the waves W1, W2 should yield the same results.

The present invention, however, is not limited solely to the type of square wave modulation discussed above. Other types of waveforms may be utilized. The waveform requirements are best illustrated mathematically, as discussed below.

The Kerr-induced rotation rate error $\Omega_k$, for the rotation sensor of the preferred embodiment, is a function of the intensity weighted average of the phase differences between the waves. Also, the detection system described above provides a signal proportional to the intensity weighted average of the non-reciprocal (Kerr-induced) phase shift. Accordingly, the Kerr-induced rotation rate error may be expressed mathematically as follows:

$$\Omega_k = \frac{c}{R}\eta n\delta(1-2K)\frac{<I_0^2(t)> - Q_i<I_0(t)^2>}{<I_0(t)>} \qquad (15)$$

where c is the velocity of light in a vacuum, R is the radius of the fiber coil, $\eta$ is the impedance of the medium, n is the Kerr coefficient of the medium, $\delta$ is a factor on the order of unity that depends upon the transverse distribution of the mode, K is the coupling ratio, $I_0(t)$ is the intensity of the modulated source wave as a function of time, and $Q_i$ is a constant, referred to herein as the "ideal waveform factor", having a value which provides complete Kerr compensation. The angle brackets indicate an average over time.

From Equation 15, it may be seen that the Kerr-induced rotation rate error can be eliminated by utilizing a waveform which reduces the numerator of the quantity in brackets to zero. Such a waveform would satisfy the equation:

$$<I_0^2(t)> = Q_i<I_0(t)>^2 \qquad (16)$$

Thus, by modulating the applied laser light in accordance with a waveform that satisfies Equation 16, complete Kerr effect compensation may be achieved. This requires that the average value of the square of the waveform intensity be equal to the waveform factor $Q_i$ times the average value of the waveform intensity squared. Although Equation 16 is expressed in terms of the modulated source light, $I_0(t)$, it will be understood that this equation applies equally to each of the counterpropagating waves W1, W2, since the splitting coupler 34 does not affect the shape of the waves, but merely splits the source wave intensity to provide the two counterpropagating waves.

If it is assumed that the fiber comprising the loop 14 is lossless, the ideal waveform factor $Q_i$ should be equal to 2.0 for complete Kerr compensation. In this regard, it will be recalled that the term "ideal waveform factor" is defined as that waveform factor necessary to achieve complete Kerr compensation. If, however, rather than being lossless, the fiber attenuates the waves to some extent, as do all present commercially available fibers, the ideal waveform factor will deviate from a value of 2.0, the amount of such deviation being a direct function of the amount of attenuation, and an inverse function of the modulation frequency.

The attenuation of a wave as it traverses the loop 14, from one end to the other, may be defined by the equation:

$$I_{in} = I_{out}e^{-2\alpha l} \qquad (17)$$

where $I_{in}$ is the intensity of the wave at the beginning of the loop, $I_{out}$ is the intensity of the wave at the end of the loop, $\alpha$ is the amplitude attenuation coefficient, and l is the length of the loop. The quantity $\alpha l$, therefore, indicates the amplitude loss of the wave as it traverses the loop, while the quantity $2\alpha l$ indicates the corresponding intensity loss.

The attenuation of the fiber, in the worst case situation, will cause the ideal waveform factor to deviate from 2.0 by an amount equal to $1/3\ \alpha^2 l^2$. This "worse case" situation assumes that the frequency of the square wave modulating waveform is such that its period is equal to twice the transit time of the loop, where the transit time of the loop is defined as the time required for a wave to traverse the loop. In general, as the period of the modulating waveform decreases (frequency increases), the deviation of the waveform factor from 2.0 will decrease. It is estimated that at frequencies above 5 megahertz, the effect of attenuation upon the waveform factor becomes negligible. Thus, for other than lossless fibers, the ideal waveform factor Qi may be defined in terms of a maximum range as follows:

$$Q_i = 2 \pm 1/3\ (\alpha^2 l^2) \qquad (18)$$

Assuming for example, that the fiber utilized attenuates the waves by e.g. 5 dB as they traverse the loop, the amplitude loss, $\alpha l$, would be equal to:

$$\alpha l = \frac{5\ dB}{20\ log_{10}e} = 0.575 \qquad (19)$$

Substituting the result of Equation 19 into Equation 18, it follows that the ideal waveform factor, for up to a 5-dB loss, will be between about 1.9 and 2.1, the exact value depending upon the amount of such loss. Thus, it may be seen that, even at very low frequencies and relatively high attenuation, the fiber losses do not greatly affect the ideal waveform factor. In practice, it is probably most convenient to select a waveform having a waveform factor of 2.0 and empirically adjust a waveform parameter, such as a duty cycle, frequency, or amplitude, until long term drift of the interferometer is minimized, to compensate for the effects of fiber losses.

Thus, by modulating the counter-propagating waves in accordance with a waveform which satisfies Equation 16, complete Kerr compensation may be provided. Significantly, such Kerr compensation is independent of the polarization of the lightwaves.

Referring back to Equation 15, it may be seen that non-reciprocal operation caused by the Kerr effect may be eliminated, at least theoretically, by adjusting the coupler 34 so that the splitting ratio is 0.5 and the waves W1, W2 are equal in intensity. However, to achieve sufficient Kerr compensation for inertial navigation applications, requiring an accuracy of .001 degrees/hr, it is estimated that the splitting ratio of the coupler 34 would need to be adjusted within a tolerance on the order of magnitude of $0.5\pm10^{-4}$, assuming a cw source. In practice, it appears that this is not possible, or at least impractical, even under laboratory conditions. It is believed that the best achievable tolerance, under laboratory conditions, would be no more than about $0.5\pm10^{-3}$, which would not provide sufficient Kerr compensation for many applications. Moreover, maintaining such a tolerance would be very difficult, particularly in commercial applications where the interferometer is subjected to vibration or other physical disturbances, as in aircraft gyroscopes.

In contrast, modulating the intensity of the waves, in accordance with a waveform satisfying Equation 16, causes the Kerr effect to be compensated, regardless of the splitting ratio of the coupler 34. Tests were conducted, utilizing the modulation technique of the present invention, with splitting ratios of 0.75, 0.50, and 0.25. The rotation rate error remained substantially constant for all splitting ratios, which indicates that the rotation rate error is independent of the splitting ratio. However, when the modulation technique was not used, the rotation rate error was substantially higher at splitting ratios of 0.75 and 0.25, than at 0.50. Nevertheless, in some situations (discussed below), it may be advantageous to adjust the coupler 34 to a splitting ratio which is as close as possible to 0.5, so that some of the Kerr compensation can be provided through coupler adjustment, while the remainder is provided by modulating the applied light according to the present invention.

As indicated previously, for inertial navigation applications, an error rate of up to $10^{-3}$ degrees/hr is typically acceptable. Therefore, in such applications, it is not essential that the Kerr compensation be perfect, and thus, the waveform factor, discussed in reference to Figure 16, need not be "ideal". The term "acceptable waveform factor", $(Q_a)$ will be used herein to refer to that waveform factor which satisfies an inertial navigation error rate standard of $10^{-3}$ degrees/hr. The required tolerance for the acceptable waveform factor depends, of course, upon the acceptable error rate, but also depends upon how close the splitting ratio of the coupler 34 is to 0.5. In other words, there is a relationship between the tolerance of the waveform factor and the splitting ratio of the coupler such that it is preferable to adjust the coupler 34 splitting ratio as nearly as practical to 0.5. This permits some of the Kerr effect compensation to be provided through coupler adjustment, while the remaining compensation can be provided by means of the modulation technique of the present invention. To examine the relationship between these tolerances, for inertial navigation accuracies (requiring an error rate of less than $10^{-3}$ degrees/hr), it is helpful to rewrite Equation 15 as:

$$\frac{\Omega k}{<I_o(t)>} = \frac{C}{R}\eta n\delta(1-2K)[\frac{<I_o^2(t)>}{<I_o(t)>^2}-Q_i] \tag{20}$$

Equation 20 may be simplified by substituting the following representative order of magnitude values:

$$\frac{C}{R}=10^{10}\text{sec}^{-1}; \quad <I_o(t)>=1 \ \mu W/\mu m^2; \quad \eta n\delta=10^{14}\mu m^2/\mu W$$

Using these values and substituting the maximum error appropriate for inertial navigation for $\Omega K$, i.e., $10^{-3}$ degrees/hr, or about $10^{-8} \text{ sec}^{-1}$, Equation 20 reduces to:

$$|(1-2K)[\frac{<I_o^2(t)>}{<I_o(t)>^2}-Q_i]|=10^{-4} \tag{21}$$

If the splitting ratio K of the coupler 34 is adjusted such that $K=0.5\pm10^{-3}$, which is believed to be the best achievable tolerance under laboratory conditions, Equation 21 reduces to:

$$|\frac{<I_o^2(t)>}{<I_o(t)>^2}-Q_i|=10^{-1} \tag{22}$$

From Equation 22, it will be seen that, for inertial navigation accuracies, the average of the intensity squared divided by the square of the average intensity should be equal to the ideal waveform factor, $Q_i\pm10^{-1}$. That is:

$$\frac{<I_o^2(t)>}{<I_o(t)>^2}=Q_i\pm10^{-1}=Q_a \tag{23}$$

14

Thus, the acceptable waveform factor is equal to the ideal waveform factor $\pm 10^{-1}$. Equation 23 may be rewritten in the following form, corresponding to Equation 16:

$$<I_0^2(t)>=(Q_i \pm 0.1)<I_0(t)>^2 \tag{24}$$

Substituting Equation 18 into Equation 24 yields a range for $Q_a$ of:

$$Q_a = 2 \pm 1/3(\alpha^2 I^2) \pm 0.1 \tag{25}$$

Thus, for the previously-described example, where $\alpha I$ was assumed to be no more than 5 dB, and the corresponding "ideal waveform factor" range was 1.9 to 2.1, the corresponding "acceptable waveform factor" range, for inertial navigation accuracies, would be 1.8 to 2.2. It will be recognized that this waveform factor range (i.e., 1.8 to 2.2) is necessarily an approximation, based on "order of magnitude" values, for a representative fiber and laser, and that the range may vary slightly, depending on the characteristics of the particular fiber and laser used. However, based upon these representative values, it is estimated that, regardless of the fiber type and laser, the acceptable waveform factor for inertial navigation accuracies of $10^{-3}$ degrees/hr should be within a range of 1.6 to 2.4.

The foregoing discussion, in general, and Equation 16, in particular, is based on the assumption that the average value of the intensity of the modulated wave, i.e., $<I_0(t)>$, is equal to the average intensity $I_0(t)$ over a time period equal to $2\tau$, where $\tau$ is the transit time of the fiber loop 14 (i.e., the time required for a wave to traverse the loop). This requirement is satisfied for example, where the modulation frequency is such that the period of the waveform times an integer is equal to the transit time of the loop. For situations where this requirement is not satisfied, the modulating waveform should be chosen according to the following, more general, version of Equation 16:

$$\frac{1}{T}\int_{-T/2}^{T/2} I_0^2(t)\,dt = \frac{Q}{T}\int_{-T/2}^{T/2} dt \left[\frac{I_0(t)}{2\tau}\int_{t-\tau}^{t+\tau} I_0(t')dt'\right] \tag{26}$$

where:

T is the integration time of the detection system (e.g., 1 hr);

$\tau$ is the transit time required for a wave to traverse the loop 14 (e.g., 3 microseconds);

$I_0(t)$ is the intensity of the intensity modulated wave as a function of time;

$I_0(t')$ is the intensity of the intensity modulated wave at an arbitrary time $t'$, where $t'$ is between $t-\tau$ and $t+\tau$; and

Q is the waveform factor (a constant), which may, for example, be equal to either the ideal waveform factor $Q_i$, or the acceptable waveform factor $Q_a$, depending upon whether the waveform is selected to provide complete Kerr compensation or whether the waveform is selected to provide compensation acceptable for inertial navigation purposes; illustrative respective values, including ranges, for these waveform factors $Q_i$, $Q_a$ were provided in the discussion above.

In general, Equation 26 will provide more precise results than Equation 16. However, the difference in results between Equations 16 and 26 decreases with increasing frequency of modulation. For example, for moderately high frequencies, e.g., greater than 10 megahertz, Equation 16 should provide substantially the same results as Equation 26. Therefore, it is preferable to utilize the more complex Equation 26 when the modulating frequency selected is relatively low (below 10 MHz), and where the average intensity of the modulated wave (over an infinite or relatively long period) does not equal the average intensity over a period equal to twice the transit time of the loop. However, the modulating frequency, in any case, should be different than those of either of the phase modulators 38, 39.

## Claims

1. A fiber optic ring interferometer comprising a light source (16), a loop (14) of fiber optic material, and a means (34) for coupling light from said source (16) to said loop (14), said coupling means (34) splitting said light from said source into first and second waves which counter-propagate through said loop with unequal intensities, characterized by means (11) for intensity modulating the light waves to vary the intensity of each of said counter-propagating waves in accordance with a waveform that satisfies the equation: the average value of the square of the waveform intensity is equal to a constant times the average value of the waveform intensity squared, said constant having a value between 1.6 and 2.4.

2. A fiber optic ring interferometer, as defined by Claim 1, characterized in that said constant has a value between 1.8 and 2.2.

3. A fiber optic ring interferometer, as defined by Claim 1, characterized in that said constant has a value between $1.9 - 1/3\,\alpha^2 I^2$ and $2.1 + 1/3\,\alpha^1 I^2$, where $\alpha$ is the amplitude attenuation coefficient of said fiber optic material, and I is the length of the fiber loop (14).

4. A fiber optic ring interferometer, as defined by any of Claims 1 to 3, characterized in that said intensity modulation is in the form of a square wave.

5. A fiber optic ring interferometer, as defined by Claim 4, characterized in that the duty cycle of said square wave is 50%.

6. A fiber optic ring interferometer, as defined by any of Claims 1 to 5, characterized in that the normalized intensity of one of said counter-propagating waves is greater than that of the other counter-propagating waves by at least $2\times10^{-3}$.

7. A fiber optic ring interferometer, as defined by any of Claims 1 to 6, characterized in that the sum of the maximum intensities of said counter-propagating waves is at least 1 watt per square centimeter.

8. A fiber optic ring interferometer, as defined by any of Claims 1 to 7, characterized in that the frequency of said modulation is at least 10 megahertz.

9. A fiber optic ring interferometer, as defined by any of Claims 1 to 8, characterized in that for each of said modulated waves, the average intensity, over an infinite time period, is equal to the average intensity over a time period equal to twice the transit time of the loop.

10. A fiber optic ring interferometer, as defined by any of Claims 1 to 7, additionally characterized by a detection system (30, 46) for detecting the phase difference between said counter-propagating waves after they have traversed said loop (14), and wherein said modulation satisfies the equation:

$$\frac{1}{T}\int_{-T/2}^{T/2} I_0^2(t)\,dt = \frac{Q}{T}\int_{-T/2}^{T/2} dt \left[\frac{I_0(t)}{2\tau}\int_{t-\tau}^{t+\tau} I_0(t')\,dt'\right]$$

where:

T is the integration time of the detection system;

$\tau$ is the transit time required for a wave to traverse the loop;

$I_0(t)$ is the intensity of the modulated light as a function of time;

$I_0(t')$ is the intensity of the modulated light at an arbitrary time $t'$, where $t'$ is between $t-\tau$ and $t+\tau$; and

Q is a constant, between 1.6 and 2.4.

11. A fiber optic ring interferometer, as defined by Claim 10, characterized in that the frequency of said waveform is less than 10 MHz.

12. A fiber optic ring interferometer, as defined by any of Claims 1—11, characterized in that said Kerr compensation provided by said waveform is independent of the polarization of said counter-propagating waves.

13. A fiber optic ring interferometer, as defined by any of Claims 1—12, characterized in that said means for intensity modulating the light comprises a modulator connected to the light source.

14. A method of reducing the AC Kerr effect in a fiber optic ring interferometer, which has a light source (16) optically coupled to apply counter-propagating lightwaves of unequal intensities to a loop (14) of fiber optic material, said method characterized by:

intensity modulating the counter-propagating lightwaves in accordance with a waveform that satisfies the equation: the average value of the square of the waveform intensity is equal to a constant times the average value of the waveform intensity squared, said constant having a value between 1.6 and 2.4.

15. A method of reducing the AC Kerr effect in a fiber optic ring interferometer, as defined by Claim 14, characterized in that said modulation is a square wave.

16. A method of reducing the AC Kerr effect in a fiber optic ring interferometer, as defined by Claim 14, characterized in that said constant has a value between $2+1/3\ \alpha^2 l^2$ and $2-1/3\ \alpha^2 l^2$, where $\alpha$ is the amplitude attenuation coefficient of the fiber optic material, and $l$ is the length of the fiber loop.

17. A method of reducing the Kerr effect in a fiber optic ring interferometer, as defined by any of Claims 14 to 16, characterized in that the sum of the maximum intensities of said counter-propagating lightwaves is greater than 1 watt per square centimeter.

18. A method of reducing the Kerr effect in a fiber optic ring interferometer, as defined by any of Claims 14 to 16, characterized in that the frequency of said intensity modulation is at least 5 MHz.

19. A method of reducing the Kerr effect in a fiber optic ring interferometer, as defined by any of Claims 14 to 16, characterized in that the frequency of said modulation is such that the average wave intensity over an infinite time period is equal to the average intensity over a time period equal to twice the transit time of the loop (14).

**Patentansprüche**

1. Faseroptikringinterferometer mit einer Lichtquelle (16), einer Schleife (14) aus faseroptischem Material und einer Einrichtung (34) zur Kopplung von Licht aus der Quelle (16) in die Schleife (14), wobei die Koppeleinrichtung (34) das Licht von der Quelle in erste und zweite Wellen unterteilt, die sich gegenläufig durch die Schleife mit ungleichen Intensitäten fortpflanzen, gekennzeichnet durch Einrichtungen (11) zur Intensitätsmodulation der Lichtwellen zur Variierung der Intensität jeder der gegenläufigen Wellen entsprechend einer Wellenform, welche die folgende Gleichung erfüllt: Der Mittelwert des Quadrats der Wellenformintensität ist gleich einer Konstante multipliziert mit dem Mittelwert der Wellenformintensität im Quadrat, wobei die Konstante ein Wert zwischen 1,6 und 2,4 ist.

2. Faseroptikringinterferometer nach Anspruch 1, dadurch gekennzeichnet, daß die Konstante einen Wert zwischen 1,8 und 2,2 besitzt.

3. Faseroptikringinterferometer nach Anspruch 1, dadurch gekennzeichnet, daß die Konstante einen Wert zwischen $1,9 - 1/3 \, \alpha^2 l^2$ und $2,1 + 1/3 \, \alpha^2 l^2$ hat, wobei $\alpha$ der Amplitudendämpfungskoeffizient des faseroptischen Materials ist und $l$ die Länge der Faserschleife 14.

4. Faseroptikringinterferometer nach einem der Ansprüche 1 bis 3, dadurch gekennzeichnet, daß die Intensitätsmodulation in Gesalt einer Rechteckwelle erfolgt.

5. Faseroptikringinterferometer nach Anspruch 4, dadurch gekennzeichnet, daß das Tastverhältnis der Rechteckwelle 50% beträgt.

6. Faseroptikringinterferometer nach einem der Ansprüche 1 bis 5, dadurch gekennzeichnet, daß die normalisierte Intensität einer der sich gegenläufig fortpflanzenden Wellen größer ist als die der anderen gegenläufigen Wellen, und zwar um wenigstens $2 \times 10^{-3}$.

7. Faseroptikringinterferometer nach einem der Ansprüche 1 bis 6, dadurch gekennzeichnet, daß die Summe der Maximalintensitäten der gegenläufigen Wellen wenigstens 1 Watt pro Quadratzentimeter beträgt.

8. Faseroptikringinterferometer nach einem der Ansprüche 1 bis 7, dadurch gekennzeichnet, daß die Frequenz de Modulation wenigstens 10 Megahertz beträgt.

9. Faseroptikringinterferometer nach einem der Ansprüche 1 bis 8, dadurch gekennzeichnet, daß für jede der modulierten Wellen die mittlere Intensität über eine unendliche Zeitspanne gleich der mittleren Intensität über eine Zeitspanne ist, die gleich oder zweimal so groß ist wie die Transitzeit der Schleife.

10. Faseroptikringinterferometer nach einem der Ansprüche 1 bis 7, zusätzlich gekennzeichnet durch ein Detektorsystem (30, 46) zur Detektierung der Phasendifferenz zwischen den gegenläufigen Wellen, nachdem diese durch die Schleife (14) gewandert sind, und wobei die Modulation der folgenden Gleichung genügt:

$$\frac{1}{T} \int_{-T/2}^{T/2} I_0^2(t)\,dt = \frac{Q}{T} \int_{-T/2}^{T/2} dt \left[ \frac{I_0(t)}{2\tau} \int_{t-\tau}^{t+\tau} I_0(t')dt' \right]$$

wobei:

T die Integrationszeit des Detektorsystems ist;

$\tau$ die Transitzeit, die eine Welle zur Durchlaufung der Schleife benötigt;

$I_0(t)$ die Intensität des modulierten Lichts als Funktion der Zeit;

$I_0(t')$ die Intensität des modulierten Lichts zu einem willkürlichen Zeitpunkt $t'$, wobei $t$ zwischen $t-\tau$ und $t+\tau$ liegt; und

Q eine Konstante zwischen 1,6 und 2,4.

11. Faseroptikringinterferometer nach Anspruch 10, dadurch gekennzeichnet, daß die Frequenz der Wellenform kleiner als 10 Megahertz ist.

12. Faseroptikringinterferometer nach einem der Ansprüche 1 bis 11, dadurch gekennzeichnet, daß die durch die Wellenform gebildete Kerr-Kompensation unabhängig von der Polarisation der gegenläufigen Wellen ist.

13. Faseroptikringinterferometer nach einem der Ansprüche 1 bis 12, dadurch gekennzeichnet, daß die Einrichtungen zur Intensitätsmodulierung des Lichtes einen Modulator umfaßt, der mit der Lichtquelle verbunden ist.

14. Verfahren zur Verminderung des Wechselstrom-Kerr-Effektes in einem Faseroptikringinterferometer, welches eine Lichtquelle (16) besitzt, die optisch derart gekoppelt ist, daß sie sich gegenläufig fortpflanzende Lichtwellen unterschiedlicher Intensität an eine Schleife (14) aus faseroptischem Material anlegt, wobei das Verfahren dadurch gekennzeichnet ist, daß die gegenläufigen Lichtwellen entsprechend einer Wellenform intensitätsmoduliert werden, welche die folgende Gleichung erfüllt: Der Mittelwert des Quadrats der Wellenformintensität ist gleich einer Konstante multipliziert mit dem Mittelwert der Wellenformintensität im Quadrat, wobei diese Konstante einen Wert zwischen 1,6 und 2,4 besitzt.

15. Verfahren zur Verminderung des Wechselstrom-Kerr-Effektes in einem Faseroptikringinterferometer nach Anspruch 14, dadurch gekennzeichnet, daß die Modulation eine Rechteckwelle ist.

16. Verfahren zur Verminderung des Wechselstrom-Kerr-Effekts in einem Faseroptikringinterferometer nach Anspruch 14, dadurch gekennzeichnet, daß die Konstante einen Wert zwischen $2 + 1/3 \, \alpha^2 l^2$ und $2 - 1/3 \, \alpha^2 l^2$ besitzt, wobei $\alpha$ der Amplitudendämpfungskoeffizient des faseroptischen Materials ist und $l$ die Länge der Faserschleife.

17. Verfahren zur Verminderung des Kerr-Effekts in einem Faseroptikringinterferometer nach einem der Ansprüche 14 bis 16, dadurch gekennzeichnet, daß die Summe der Maximalintensitäten der gegenläufigen Lichtwellen größer als 1 Watt pro Quadratzentimeter ist.

18. Verfahren zur Verminderung des Kerr-Effekts in einem Faseroptikringinterferometer nach einem der Ansprüche 14 bis 16, dadurch gekennzeichnet, daß die Frequenz der Intensitätsmodulation wenigstens 5 Megahertz beträgt.

19. Verfahren zur Verminderung des Kerr-Effekts in einem Faseroptikringinterferometer nach einem der Ansprüche 14 bis 16, dadurch gekennzeichnet, daß die Frequenz der Modulation derart bemessen ist, daß die mittlere Wellenintensität über eine unendliche Zeitspanne gleich der mittleren Intensität über eine Zeitspanne ist, die gleich oder zweimal so groß ist wie die Transitzeit der Schleife 14.

**Revendications**

1. Un interféromètre en anneau à fibre optique comprenant une source de lumière (16), une boucle (14) de matière consistant en fibre optique, et des moyens de couplage (34) destinés à transmettre à la boucle (14) la lumière provenant de la source (16), ces moyens de couplage (34) divisant la lumière qui provient de la source en une première onde et une seconde onde qui se propagent en sens contraire dans la boucle avec des intensités inégales, caractérisé par des moyens (11) destinés à moduler l'intensité des ondes lumineuses pour faire varier l'intensité de chacune des ondes se propageant en sens contraire conformément à un signal qui satisfait l'équation suivante: la valeur moyenne du carré de l'intensité du signal est égale au produit d'une constante par la valeur moyenne de l'intensité du signal au carré, cette constante ayant une valeur comprise entre 1,6 et 2,4.

2. Un interféromètre en anneau à fibre optique selon la revendication 1, caractérisé en ce que la constante a une valeur comprise entre 1,8 et 2,2.

3. Un interféromètre en anneau à fibre optique selon la revendication 1, caractérisé en ce que la constante a une valeur comprise entre $1,9-1/3 \, \alpha^2 l^2$ et $2,1+1/3 \, \alpha^2 l^2$, en désignant par $\alpha$ le coefficient d'atténuation d'amplitude de la matière à fibre optique et par $l$ la longeur de la boucle de fibre (14).

4. Un interféromètre en anneau à fibre optique selon l'une quelconque des revendications 1 à 3, caractérisé en ce que la modulation d'intensité se présente sous la forme d'une onde carrée.

5. Un interféromètre en anneau à fibre optique selon la revendication 4, caractérisé en ce que le rapport cyclique de l'onde carrée est de 50%.

6. Un interféromètre en anneau à fibre optique selon l'une quelconque des revendications 1 à 5, caractérisé en ce que l'intensité normalisée de l'une des ondes se propageant en sens contraire est supérieure d'au moins $2 \times 10^{-3}$ à celle de l'autre onde se propageant en sens contraire.

7. Un interféromètre en anneau à fibre optique selon l'une quelconque des revendications 1 à, caractérisé en ce que la somme des intensités maximales des ondes se propageant en sens contraire est d'au moins 1 watt par centimètre carré.

8. Un interféromètre en anneau à fibre optique selon l'une quelconque des revendications 1 à 7, caractérisé en ce que la fréquence de la modulation est au moins de 10 mégahertz.

9. Un interféromètre en anneau à fibre optique selon l'une quelconque des revendications 1 à 8, caractérisé en ce que, pour chacune des ondes modulées, l'intensité moyenne, sur un intervalle de temps infini, est égale à l'intensité moyenne sur un intervalle de temps égal au double du temps de transit de la boucle.

10. Un interféromètre en anneau à fibre optique selon l'une quelconque des revendications 1 à 7, caractérisé en outre par un système de détection (30, 46) destiné à détecter la différence de phase entre les ondes se propageant en sens contraire, après qu'elles ont parcouru la boucle (14), et dans lequel la modulation satisfait l'équation:

$$\frac{1}{T} \int_{-T/2}^{T/2} I_0^2(t) \, dt = \frac{Q}{T} \int_{-T/2}^{T/2} dt \left[ \frac{I_0(t)}{2\tau} \int_{t-\tau}^{t+\tau} I_0(t') dt' \right]$$

dans laquelle:
   T est le temps d'intégration du système de détection;
   $\tau$ est le temps de transit nécessaire à une onde pour parcourir la boucle;
   $I_0(t)$ est l'intensité de la lumière modulée, en fonction du temps;
   $I_0(t')$ est l'intensité de la lumière modulée à un instant arbitraire t', avec t' compris entre $t-\tau$ et $t+\tau$; et
   Q est une constante comprise entre 1,6 et 2,4.

11. Un interféromètre en anneau à fibre optique selon la revendication 10, caractérisé en ce que la fréquence du signal est inférieure à 10 MHz.

12. Un interféromètre en anneau à fibre optique selon l'une quelconque des revendications 1—11, caractérisé en ce que la compensation d'effet Kerr que procure le signal précité est indépendante de la polarisation des ondes qui se propagent en sens contraire.

13. Un interféromètre en anneau à fibre optique selon l'une quelconque des revendications 1—12, caractérisé en ce que les moyens destinés à moduler l'intensité de la lumière consistent en un modulateur connecté à la source de lumière.

14. Un procédé pour réduire l'effet Kerr en alternatif dans un interféromètre en anneau à fibre optique, comportant une source de lumière (16) placée en couplage optique de façon à appliquer des ondes lumineuses d'intensité inégale et se propageant en sens contraire à une boucle (14) de matière consistant en une fibre optique, ce procédé étant caractérisé en ce que:
   on module l'intensité des ondes lumineuses se propageant en sens contraire, conformément à un signal qui satisfait l'équation suivante: la valeur moyenne du carré de l'intensité du signal est égale au

18

produit d'une constante par la valeur moyenne de l'intensité du signal au carré, cette constante ayant une valeur comprise entre 1,6 et 2,4.

15. Un procédé pour réduire l'effet Kerr en alternatif dans un interféromètre en anneau à fibre optique selon la revendication 14, caractérisé en ce que le signal de modulation est un signal carré.

16. Un procédé pour réduire l'effet Kerr en alternatif dans un interféromètre en anneau à fibre optique selon la revendication 14, caractérisé en ce que la constante a une valeur comprise entre $2 + 1/3\,\alpha^2 l^2$ et $2 - 1/3\,\alpha^2 l^2$, en désignant par $\alpha$ le coefficient d'atténuation d'amplitude de la matière de la fibre optique et par l la longueur de la boucle de fibre.

17. Un procédé pour réduire l'effet Kerr dans un interféromètre en anneau à fibre optique selon l'une quelconque des revendications 14 à 16, caractérisé en ce que la somme des intensités maximales des ondes lumineuses se propageant en sens contraire est supérieure à 1 watt par centimètre carré.

18. Un procédé pour réduire l'effet Kerr dans un interféromètre en anneau à fibre optique selon l'une quelconque des revendications 14 à 16, caractérisé en ce que la fréquence de la modulation d'intensité est d'au moins 5 MHz.

19. Un procédé pour réduire l'effet Kerr dans un interféromètre en anneau à fibre optique selon l'une quelconque des revendications 14 à 16, caractérisé en ce que la fréquence de la modulation est telle que l'intensité moyenne de l'onde sur un intervalle de temps infini est égale à l'intensité moyenne sur un intervalle de temps égal au double du temps de transit de la boucle (14).

Fig. 1

*Fig. 2*

*Fig. 3*

*Fig. 4*

*Fig. 5*

*Fig. 6*

Fig. 7

Fig. 8

*Fig. 9*

*Fig. 10*

Fig. 11